# EUROPÄISCHE PATENTSCHRIFT

(11) **EP 1 306 601 B1**
(45) Veröffentlichungstag und Bekanntmachung des Hinweises auf die Patenterteilung: **21.01.2009**
(21) Anmeldenummer: 02022834.2
(22) Anmeldetag: 12.10.2002
(51) Int. Cl.: F16L 33/207

(54) **Pressfitting für den Anschluss mindestens eines Rohres**
Compression fitting for the connection of at least one pipe
Raccords à compression pour la connection d'au moins un tuyau

(30) Priorität: 26.10.2001 DE 10152975
(43) Veröffentlichungstag der Anmeldung: 02.05.2003
(73) Patentinhaber: Uponor Innovation AB, 513 81 Fristad (SE)
(72) Erfinder: Kaufmann, Bernd, 97437 Hassfurt (DE)
(74) Vertreter: Hilleringmann, Jochen

(56) Entgegenhaltungen:
- DE-A- 1 806 955
- DE-C- 19 841 155
- US-A- 2 171 945

## Beschreibung

Die Erfindung betrifft einen Pressfitting für den Anschluss mindestens eines Rohres.

Pressfittinge weisen im allgemeinen einen Fittingkörper auf, an dem eine profilierte Stützhülse ausgebildet ist, die ein freies Ende aufweist, über das auf die Stützhülse das Ende eines anzuschließenden Rohres aufschiebbar ist. Dieses Rohrende wird mit Hilfe einer plastisch verformbaren Presshülse radial auf die Stützhülse aufgepresst.

Um die Presshülse direkt am Fittingkörper axial zu fixieren, ist es aus DE-A-18 06 955 bekannt, das dem freien Ende der Stützhülse abgewandte Ende der Presshülse, das im Bereich eines Bundes des Fittingkörpers angeordnet ist, beim Aufpressen des Rohrendes und damit beim Verformen der Presshülse in die Fixiernut hineinzupressen. Ein vergleichbarer Pressfitting ist aus DE-C-198 41 155 bekannt.

Darüber hinaus sind Pressfittinge mit Presshülsen bekannt, die bereits vor ihrer Verformung zum Aufpressen des Rohrendes am Fittingkörper unverlierbar gehalten sind (siehe z. B. JP-A-08326974 bzw. korrespondierenden Patent Abstract of Japan). Hierbei weist die Presshülse einen im Durchmesser verringerten Einschnür- bzw. Fixierbereich auf, der in eine Fixiernut des Fittingkörpers eingetaucht ist. Dabei muss die Presshülse werkseitig so weit auf den Fittingkörper aufgeschoben werden, dass der Fixierbereich der Presshülse in die Fixiernut des Fittingkörpers einschnappt.

Aus US-A-2 171 945 ist ein Fitting mit einem Fittingkörper bekannt, mit dem eine Presshülse verschraubt ist, die im verschraubten Zustand konzentrisch zur Stützhülse des Fittingkörpers angeordnet ist.

Pressfittinge mit unverlierbar angebrachter Presshülse sind insbesondere montagefreundlich. Bei ihnen besteht jedoch die Gefahr, dass je nach dem, welcher Teil (Fittingkörper oder Presshülse) aus dem weniger widerstandsfähigen Material, beispielsweise Kunststoff, besteht, beim Aufschieben der Presshülse auf den Fittingkörper beschädigt wird. Dies ist insbesondere bezüglich des Fittingkörpers zu befürchten, wenn dieser aus Kunststoff und die Presshülse aus Metall besteht.

Der Erfindung liegt die Aufgabe zu Grunde, einen Pressfitting mit unverlierbar anbringbarer Presshülse zu schaffen, bei dem die Gefahr, dass der Fittingkörper auch dann, wenn er aus Kunststoff besteht, bei dem Zusammenfügen von Presshülse und Fittingkörper nicht beschädigt wird, verringert ist.

Zur Lösung dieser Aufgabe wird gemäß einer ersten Variante der Erfindung ein Pressfitting für den Anschluss mindestens eines Rohres vorgeschlagen, der mit den Merkmalen des Anspruchs 1 versehen ist.

Nach der Erfindung gemäß der ersten Variante ist also vorgesehen, dass der Fixierwulst, über den die Presshülse mit ihrem Fixierbereich zur unverlierbaren Lagerung an dem Fittingkörper geschoben werden muss, in einem spitzen Winkel zur Radialerstreckung verläuft. Der Fixierwulst weist einen Durchmesser auf, der geringfügig größer ist als der Durchmesser der Presshülse in deren Fixierbereich. Auf Grund der Schrägstellung gleitet der Fixierbereich sanft über den Fixierwulst hinweg, um diesen zu hintergreifen. Damit werden Beschädigungen des Fittingkörpers auch dann, wenn dieser aus Kunststoff besteht bzw. Kunststoff aufweist und die Presshülse aus Metall besteht bzw. Metall aufweist, verringert. Zweckmäßigerweise ist die dem freien Ende der Stützhülse zugewandte Seitenflanke der Fixierwulst schrägverlaufend ausgebildet, so dass sich eine Auflauffläche ergibt, über die der Fixierbereich der Presshülse gleiten kann. Alternativ oder zusätzlich kann eine solche Schrägfläche auch in dem Fixierbereich der Presshülse auf dessen dem freien Ende der Stützhülse abgewandten Seite (bei aufgeschobener Presshülse betrachtet) angeordnet sein.

Ferner ist es möglich, dass der Fixierwulst als geschlossener Ring oder schraubenlinienförmig verläuft, also einem Abschnitt eines Gewindes gleicht, wobei sich dieser Gewindegang über mehr als 360° und vorzugsweise bis 450° bzw. 540° längs des Umfangs erstreckt.

Alternativ zur zuvor genannten ersten Variante der Erfindung wird eine zweite Variante eines Pressfittings vorgeschlagen, der mit den Merkmalen des Anspruchs 4 versehen ist.

Im Unterschied zur ersten Variante der Erfindung ist bei der zweiten Variante des erfindungsgemäßen Pressfittings der Fixierwulst im wesentlichen radial ausgerichtet, während der Fixierbereich der Presshülse schräg zur Radialebene verläuft. Der Fixierbereich der Presshülse kann geschlossen umlaufend oder aber nach Art eines Gewindegangs mit Gewindesteigung über mehr als 360°, insbesondere 540° bzw. 450° und damit nicht geschlossen ausgebildet sein. Es ergeben sich bei dieser zweiten Variante genau die gleichen Vorteile wie bei der ersten Variante der Erfindung, da in beiden Fällen gilt, dass der sich vorzugsweise als Innenwulst darstellende Fixierbereich der Presshülse beim axialen Aufschieben der Presshülse auf den Fittingkörper winklig zum Fixierwulst des Fittingkörpers erstreckt. Dies kann durch radiale Ausrichtung des Fixierwulstes bei schräg zur Radialebene ausgerichtetem Fixierbereich der Presshülse oder umgekehrt oder aber auch - gemäß einer dritten Variante der Erfindung - dadurch erreicht werden, dass sowohl die Fixiernut als auch der Fixierbereich der Presshülse jeweils winklig zur Radialerstreckung verlaufen. In diesem letztgenannten Fall existiert bei gleicher Schrägstellung eine Verdrehposition von Presshülse und Fittingkörper, in der der Fixierbereich der Presshülse im wesentlichen parallel zum Fixierwulst des Fittingkörpers verläuft. Deshalb sollte man bei dieser letztgenannten Variante der Erfindung darauf achten, dass die Winkel, unter denen der Fixierwulst und der Fixierbereich zur Radialebene verlaufen, unterschiedlich sind.

Gemäß sämtlicher drei Varianten der Erfindung gilt, dass der Fixierbereich eine Anlagefläche zur Anlage an dem Fixierwulst (und zwar an dessen dem freien Ende der Stützhülse abgewandten Seite) aufweist. Der Fixierbereich kann also z.B. als Innenvorsprung, Innenvertiefung oder als Übergang von einem Abschnitt größeren Durchmessers zu einem Abschnitt gegenüber dem Fixierwulst kleineren Durchmessers ausgebildet sein. Bei sämtlichen dieser Ausgestaltungen ergibt sich eine im wesentlichen radial bzw. in Umfangsrichtung verlaufende Fläche, die nach dem Schieben des Fixierbereichs der Presshülse über den Fixierwulst an dessen dem freien Ende der Stützhülse abgewandten Seitenflanke anliegt und ein unbeabsichtigtes Ablösen der Presshülse vom Fittingkörper verhindert.

Als mögliche Materialien für den Fittingkörper kommen Kunststoffe, Metalle, Metalllegierungen, aber auch keramische Werkstoffe in Frage. Kombinationen dieser Materialien in Form von Verbundwerkstoffen, aus denen der Fittingkörper gefertigt ist, sind ebenfalls denkbar. Auch die Presshülse kann diese Materialien bzw. Verbundwerkstoffe aus diesen Materialien aufweisen.

Weitere Ausgestaltungen und Vorteile der Erfindung sind in den Unteransprüchen angeben bzw. ergeben sich aus diesen.

Die Erfindung wird nachfolgend anhand zweier Ausführungsbeispiele unter Bezugnahme auf die Zeichnung näher erläutert. Dabei zeigen im einzelnen:
- Fig. 1: einen Halbschnitt durch einen Fittingkörper gemäß einem ersten Ausführungsbeispiel des erfindungsgemäßen Pressfittings,
- Fig. 2: den Fittingkörper gemäß Fig. 1 mit auf diesen aufgeschobenen Presshülsen, ebenfalls im Halbschnitt, und
- Fig. 3: eine Seitenansicht eines Fittingkörpers gemäß einem zweiten Ausführungsbeispiel des erfindungsgemäßen Pressfittings.

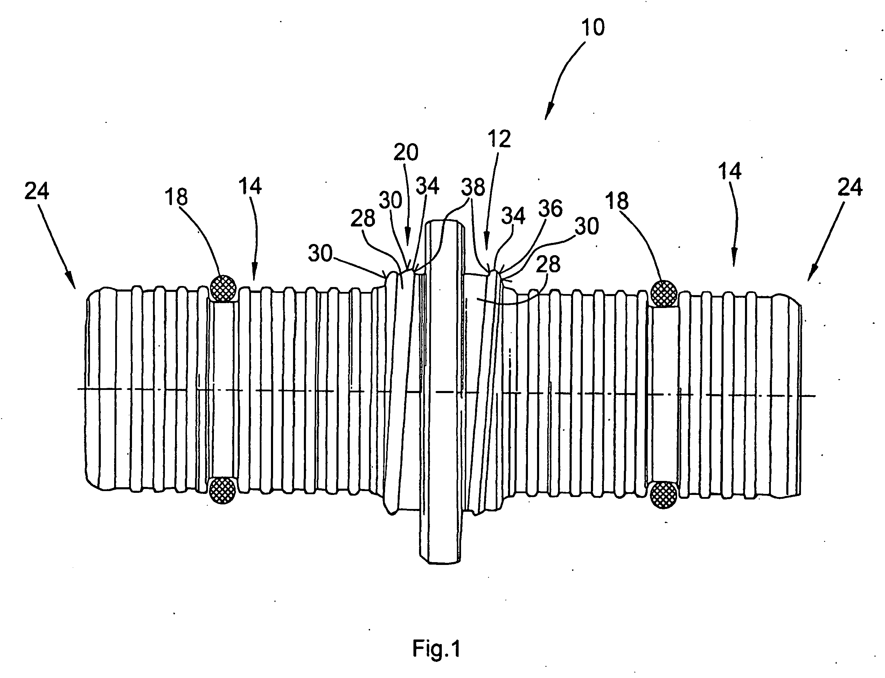

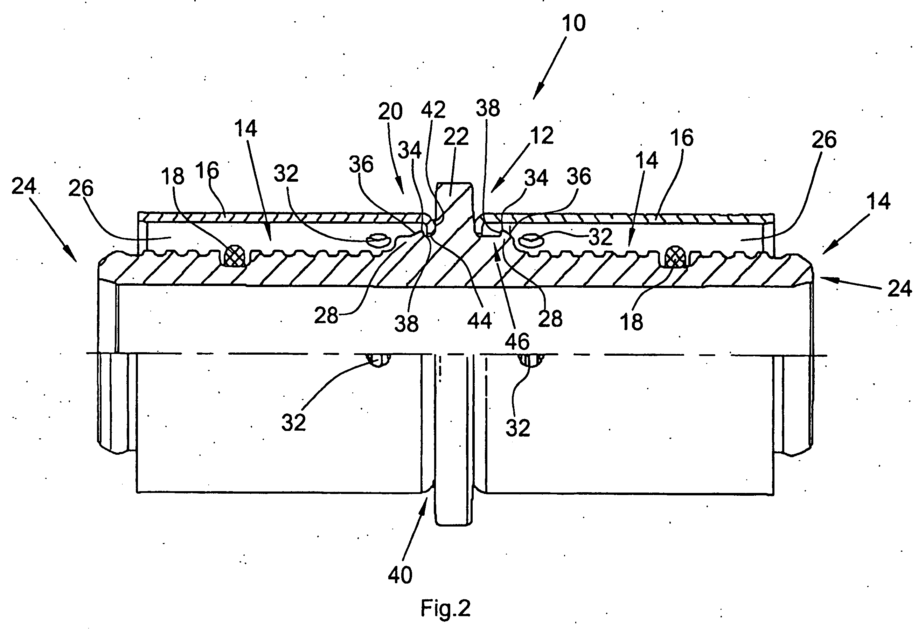

In den Fign. 1 und 2 ist ein erstes Ausführungsbeispiel eines Pressfittings 10 gezeigt, der einen Fittingkörper 12 aus Kunststoff mit zwei Stützhülsen 14 für den Anschluss zweier Rohre (nicht gezeigt) aufweist. Konzentrisch und mit radialem Abstand zu den Stützhülsen 14 sind zwei metallische Presshülsen 16 angeordnet, die am Fittingkörper 12 unverlierbar gehalten sind.

Die beiden Stützhülsen 14 sind profiliert und weisen jeweils vorzugsweise mindestens einen Dichtring 18 aus einem elastomeren Material auf. Zwischen beiden Stützhülsen 14 befindet sich ein im Durchmesser aufgeweiteter Abschnitt 20, der in Form eines sich radial über die Stützhülsen 14 erstreckenden Bundes 22 ausgebildet ist.

Über die dem Bund 22 abgewandten freien Enden 24 der Stützhülsen 14 werden die Enden zweier durch den Pressfitting 10 miteinander zu verbindender Rohre auf die Stützhülsen 14 geschoben, so dass sie sich in den Ringräumen 26 zwischen den Stützhülsen 14 und den Presshülsen 16 befinden.

Zwischen jeder Stützhülse 14 und dem Bund 22 befindet sich ein im Durchmesser gegenüber der Stützhülse 14 vergrößerter Übergangsbereich 28, deren jeweils zur Stützhülse 14 weisende Übergangsflächen 30 der Anlage der anzuschließenden Rohr dient und innerhalb denen die Presshülsen 16 gehalten sind. In Höhe der Übergangsfläche 30 bzw. von dem freien Ende 24 der Stützhülse 14 aus betrachtet kurz vor den Übergangsflächen 30 befinden sich in der Presshülse 16 Lagekontrollöffnungen 32.

In jedem Übergangsbereich 28 des Fittingkörpers 12 ist ein außenliegender Fixierwulst 34 (mit sägezahnähnlichem Profil) ausgebildet, deren dem freien Ende der Stützhülse 14 zugewandte erste Seitenflanke 36 schrägverlaufend ausgebildet ist und deren zweite Seitenflanke 38 in einem Winkel von etwa 90° zur Längsachse der Stützhülse 14 verläuft. Jede Presshülse 16 ist an ihrem dem Bund 22 zugewandten Ende 40 nach innen umgebördelt, so dass ein nach innen ragender Rand 42 mit Anlagefläche 44 entsteht, der einen Fixierbereich 46 zum Fixieren der Presshülse 16 an dem Fittingkörper 12 bildet. Der Rand 42 hintergreift den Fixierwulst 34 des Fittingkörpers 12, wobei die Anlagefläche 44 partiell an der zweiten Seitenflanke 38 des Fixierwulstes 34 anliegt.

Durch axiales Aufschieben einer Presshülse 16 auf den Fittingkörper 12 über den im Durchmesser gegenüber dem Rand 42 der Presshülse 16 geringfügig größeren Fixierwulst 34 gelangt der Presshülsenrand 42 bis hinter den Fixierwulst 34. Dabei besteht die Gefahr, dass die Fixierwülste 34 beschädigt werden.

Daher ist bei dem Pressfitting 10 gemäß den Fign. 1 und 2 vorgesehen, dass jeder Fixierwulst 34 schrägliegend zur Radialerstreckung der Stützhülse 14 verläuft. Durch den bezogen auf eine Radialebene schrägen Verlauf jeder Fixierwulst 34 lässt sich die Presshülse 16 für den Fittingkörper 12 materialschonender über den Fixierwulst 34 schieben. Bei diesem Vorgang kann sich die Presshülse 16 leicht winklig zur Axialerstreckung der Stützhülse 14 ausrichten. Deshalb und auf Grund des Umstandes, dass die erste Seitenflanke 36 des Fixierwulstes 34 ansteigend ausgebildet ist, wird der Vorgang des Bewegens des Randes 42 der Presshülse 16 über den Fixierwulst 34 weiter erleichtert.

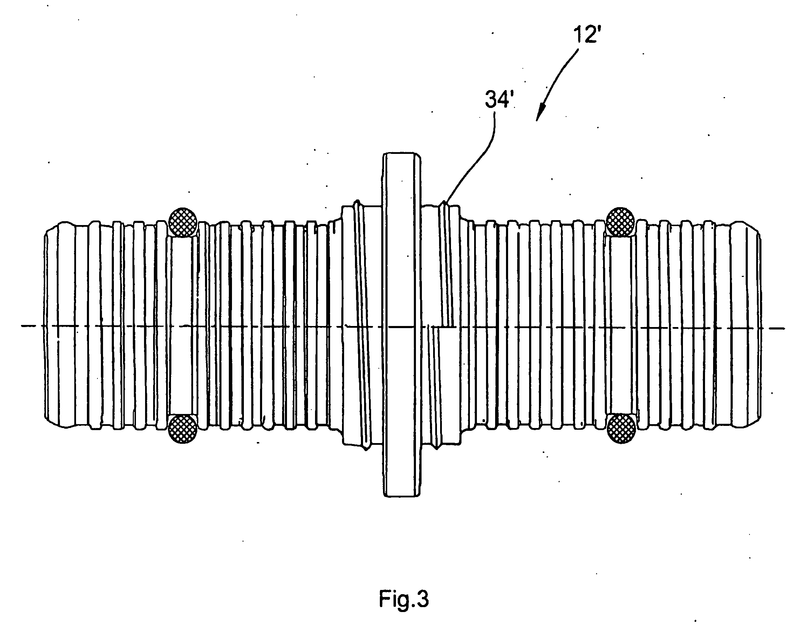

Fig. 3 zeigt einen Fittingkörper 12' gemäß einem alternativen Ausführungsbeispiel, bei dem der Fixierwulst 34' nicht wie in den Fign. 1 und 2 gezeigt, als geschlossener Ring verläuft, sondern nach Art eines sich über etwa 400° erstreckende Gewindeganges. Die Wirkungen und Mechanismen beim Schieben der Ränder 42 der Presshülse 16 (siehe Fig. 2) über den in Umfangsrichtung schraubenlinienförmig verlaufenden Fixierwulst 34' sind die gleichen wie bei dem Ausführungsbeispiel gemäß den Fign. 1 und 2.

## Patentansprüche

1. Pressfitting für den Anschluss mindestens eines Rohres, mit
- einem Fittingkörper (12.12'), der mindestens eine Stützhülse (14) mit einem freien Ende (24) aufweist, über das das Ende eines anzuschließenden Rohres auf die Stützhülse (14) aufschiebbar ist,
- wobei der Fittingkörper (12,12') einen sich um die Stützhülse (14) herum erstreckenden und in einem spitzen Winkel zur Radialerstreckung der Stützhülse (14) verlaufenden Fixierwulst (34,34') aufweist, der an dem dem freien Ende (24) gegenüberliegenden Ende der Stützhülse (14) angeordnet ist,
- einer im wesentlichen konzentrisch zur Stützhülse (14) angeordneten Presshülse (16), die einen sich im wesentlichen radial zur Presshülse (16) erstreckenden Fixierbereich (46) aufweist, in dem die Presshülse (16) einen geringeren Durchmesser als der Fixierwulst (34,34') des Fittingkörpers (12,12') aufweist und der zum Hintergreifen des Fixierwulstes (34,34') vorgesehen ist,
**dadurch gekennzeichnet,**
- **dass** der Innendurchmesser des Fixierbereichs (46) der Presshülse (16) und der Außendurchmesser des Fixierwulstes (34,34') des Fittingkörpers (12,12') derart aufeinander abgestimmt sind, dass sich der Fixierbereich (46) der Presshülse (16) über den Fixierwulst (34,34') des Fittingkörpers (12,12') bei axialer Bewegung schieben lässt.

2. Pressfitting nach Anspruch 1, **dadurch gekennzeichnet, dass** der Fixierwulst (34,34') des Fittingkörpers (12,12') in Umfangsrichtung geschlossen ausgebildet ist.

3. Pressfitting nach Anspruch 1 oder 2, **dadurch gekennzeichnet, dass** der Fixierwulst (34,34') des Fittingkörpers (12,12') sich in Umfangsrichtung schraubenlinienförmig erstreckt.

4. Pressfitting für den Anschluss mindestens eines Rohres, mit
- einem Fittingkörper (12,12'), der mindestens eine Stützhülse (14) mit einem freien Ende (24) aufweist, über das das Ende eines anzuschließenden Rohres auf die Stützhülse (14) aufschiebbar ist,
- wobei der Fittingkörper (12,12') einen sich um die Stützhülse (14) herum erstreckenden Fixierwulst (34,34') aufweist, der an dem dem freien Ende (24) gegenüberliegenden Ende der Stützhülse (14) angeordnet ist,
- einer im wesentlichen konzentrisch zur Stützhülse (14) angeordneten Presshülse (16), die einen in einem spitzen Winkel zu ihrer Radialerstreckung verlaufenden Fixierbereich (46) aufweist, in dem die Presshülse (16) einen geringeren Durchmesser als der Fixierwulst (34,34') des Fittingkörpers (12,12') aufweist und der zum Hintergreifen des Fixierwulstes (34,34') vorgesehen ist,
**dadurch gekennzeichnet,**
- **dass** der Innendurchmesser des Fixierbereichs (46) der Presshülse (16) und der Außendurchmesser des Fixierwulstes (34,34') des Fittingkörpers (12,12') derart aufeinander abgestimmt sind, dass sich der Fixierbereich (46) der Presshülse (16) über den Fixierwulst (34,34') des Fittingkörpers (12,12') bei axialer Bewegung schieben lässt.

5. Pressfitting nach Anspruch 4, **dadurch gekennzeichnet, dass** der Fixierbereich (46) der Presshülse (16) in Umfangsrichtung geschlossen ausgebildet ist.

6. Pressfitting nach Anspruch 4 oder 5, **dadurch gekennzeichnet, dass** der Fixierbereich (46) der Presshülse (16) sich in Umfangsrichtung schraubenlinienförmig erstreckt.

7. Pressfitting für den Anschluss mindestens eines Rohres, mit
- einem Fittingkörper (12,12'), der mindestens eine Stützhülse (14) mit einem freien Ende (24) aufweist, über das das Ende eines anzuschließenden Rohres auf die Stützhülse (14) aufschiebbar ist,
- wobei der Fittingkörper (12,12') einen sich um die Stützhülse (14) herum erstreckenden und in einem spitzen Winkel zur Radialerstreckung der Stützhülse (14) verlaufenden Fixierwulst (34,34') aufweist, der an dem dem freien Ende (24) gegenüberliegenden Ende der Stützhülse (14) angeordnet ist,
- einer im wesentlichen konzentrisch zur Stützhülse (14) angeordneten Presshülse (16), die einen in einem spitzen Winkel zu ihrer Radialerstreckung verlaufenden Fixierbereich (46) aufweist, in dem die Presshülse (16) einen geringeren Durchmesser als der Fixierwulst (34,34') des Fittingkörpers (12,12') aufweist und der zum Hintergreifen des Fixierwulstes (34,34') vorgesehen ist,
**dadurch gekennzeichnet,**
- **dass** der Innendurchmesser des Fixierbereichs (46) der Presshülse (16) und der Außendurchmesser des Fixierwulstes (34,34') des Fittingkörpers (12,12') derart aufeinander abgestimmt sind, dass sich der Fixierbereich (46) der Presshülse (16) über den Fixierwulst (34,34') des Fittingkörpers (12,12') bei axialer Bewegung schieben lässt.

8. Pressfitting nach Anspruch 7, **dadurch gekennzeichnet, dass** die spitzen Winkel unterschiedlich sind.

9. Pressfitting nach einem der Ansprüche 1 bis 8, **dadurch gekennzeichnet, dass** der Fixierwulst (34,34') innerhalb eines sich an die Stützhülse (14) anschließenden Bereichs (28) des Fittingkörpers (12,12') angeordnet ist, dessen Durchmesser gegenüber demjenigen der Stützhülse (14) größer und kleiner als der Durchmesser des Fixierbereichs der Presshülse (16) ist.

10. Pressfitting nach einem der Ansprüche 1 bis 9, **dadurch gekennzeichnet, dass** der Fixierbereich (46) der Presshülse (16) als nach innen umgebördeltes Ende (40) der Presshülse (16) ausgebildet ist.

11. Pressfitting nach einem der Ansprüche 1 bis 9, **dadurch gekennzeichnet, dass** die Presshülse (16) in ihrem Fixierbereich (46) sickenförmig ausgebildet ist.

12. Pressfitting nach einem der Ansprüche 1 bis 11, **dadurch gekennzeichnet, dass** der Fixierwulst (34,34') eine dem freien Ende (24) der Stützhülse (14) im wesentlichen abgewandte Seitenfläche (38) und der Fixierbereich (46) der Presshülse (16) eine im wesentlichen zum freien Ende (24) der Stützhülse (14) weisende Anlagefläche (44) zur Anlage an der Seitenfläche (38) des Fixierwulstes (34,34') aufweist.

13. Pressfitting nach einem der Ansprüche 1 bis 12, **dadurch gekennzeichnet, dass** der Fixierwulst (34,34') an seiner dem freien Ende (24) der Stützhülse (14) zugewandten Seite eine Schrägfläche (36) aufweist, über die der Fixierbereich (46) der Presshülse (16) zum Hintergreifen des Fixierwulstes (34,34') gleiten kann.

14. Pressfitting nach einem der Ansprüche 1 bis 13, **dadurch gekennzeichnet, dass** der Fittingkörper Kunststoff, Metall und/oder einen keramischen Werkstoff und/oder die Presshülse Metall und/oder Kunststoff aufweist.

## Claims

1. A press fitting for connecting at least one pipe, comprising
- a fitting body (12, 12') with at least one support sleeve (14) having a free end (24) over which the end of a pipe to be connected is adapted to be slipped onto the support sleeve (14),
- the fitting body (12, 12') comprises a fixing bead (34, 34') extending around the support sleeve (14) and under an acute angle to the radial extension of the support sleeve (14), said fixing bead being arranged at the end of the support sleeve (14) opposite the free end (24),
- a compression sleeve (16) arranged substantially concentrically to the support sleeve (14), said compression sleeve having a fixing portion (46) extending substantially radially with respect to the compression sleeve (16), in which fixing portion the compression sleeve (16) has a smaller diameter than the fixing bead (34, 34') of the fitting body (12, 12') and which is adapted to engage behind the fixing bead (34, 34'),
**characterized in that**
- the inner diameter of the fixing portion (46) of the compression sleeve (16) and the outer diameter of the fixing bead (34, 34') of the fitting body (12, 12') are matched such that the fixing portion (46) of the compression sleeve (16) may be slipped over the fixing bead (34, 34') of the fitting body (12, 12') in an axial movement.

2. The press fitting of claim 1, **characterized in that** the fixing bead (34, 34') of the fitting body (12, 12') is closed in the circumferential direction.

3. The press fitting of claim 1 or 2, **characterized in that** the fixing bead (34, 34') of the fitting body (12, 12') extends helically in the circumferential direction.

4. A press fitting for connecting at least one pipe, comprising
- a fitting body (12, 12') with at least one support sleeve (14) having a free end (24) over which the end of a pipe to be connected is adapted to be slipped onto the support sleeve (14),
- the fitting body (12, 12') comprises a fixing bead (34, 34') extending around the support sleeve (14), said fixing bead being arranged at the end of the support sleeve (14) opposite the free end (24),
- a compression sleeve (16) arranged substantially concentrically to the support sleeve (14), said compression sleeve having a fixing portion (46) extending under an acute angle to the radial extension of the compression sleeve, in which fixing portion the compression sleeve (16) has a smaller diameter than the fixing bead (34, 34') of the fitting body (12, 12') and which is provided for engaging behind the fixing bead (34, 34'),
**characterized in that**
- the inner diameter of the fixing portion (46) of the compression sleeve (16) and the outer diameter of the fixing bead (34, 34') of the fitting body (12, 12') are matched such that the fixing portion (46) of the compression sleeve (16) may be slipped over the fixing bead (34, 34') of the fitting body (12, 12') in an axial movement.

5. The press fitting of claim 4, **characterized in that** the fixing portion (46) of the compression sleeve (16) is closed in the circumferential direction.

6. The press fitting of claim 4 or 5, **characterized in that** the fixing portion (46) of the compression sleeve (16) extends helically in the circumferential direction.

7. A press fitting for connecting at least one pipe, comprising
- a fitting body (12, 12') with at least one support sleeve (14) having a free end (24) over which the end of a pipe to be connected is adapted to be slipped onto the support sleeve (14),
- the fitting body (12, 12') comprises a fixing bead (34, 34') extending around the support sleeve (14) and under an acute angle to the radial extension of the support sleeve (14), said fixing bead being arranged at the end of the support sleeve (14) opposite the free end (24),
- a compression sleeve (16) arranged substantially concentrically to the support sleeve (14), said compression sleeve having a fixing portion (46) extending under an acute angle to the radial extension of the compression sleeve, in which fixing portion the compression sleeve (16) has a smaller diameter than the fixing bead (34, 34') of the fitting body (12, 12') and which is provided for engaging behind the fixing bead (34, 34'),
**characterized in that**
- the inner diameter of the fixing portion (46) of the compression sleeve (16) and the outer diameter of the fixing bead (34, 34') of the fitting body (12, 12') are matched such that the fixing portion (46) of the compression sleeve (16) may be slipped over the fixing bead (34, 34') of the fitting body (12, 12') in an axial movement.

8. The press fitting of claim 7, **characterized in that** the acute angles differ from each other.

9. The press fitting of one of claims 1 to 8, **characterized in that** the fixing bead (34, 34') is arranged within a portion (28) of the fitting body (12, 12') adjoining the support sleeve (14), the diameter of this portion being larger than that of the support sleeve (14) and smaller than the diameter of the fixing portion of the compression sleeve (16).

10. The press fitting of one of claims 1 to 9, **characterized in that** the fixing portion (46) of the compression sleeve (16) is configured as inward bent (40) of the compression sleeve (16).

11. The press fitting of one of claims 1 to 9, **characterized in that** the compression sleeve (16) is crease-shaped in its fixing portion (46).

12. The press fitting of one of claims 1 to 11, **characterized in that** the fixing bead (34, 34') has a side face (38) substantially averted from the free end (24) of the support sleeve (14) and the fixing portion (46) of the compression sleeve (16) has a contact face (44) substantially directed towards the free end (24) of the support sleeve (14) for abutment against the side face (38) of the fixing bead (34, 34').

13. The press fitting of one of claims 1 to 12, **characterized in that** the fixing bead (34, 34') has an inclined surface (36) on the side facing the free end (24) of the support sleeve (14), over which the fixing portion (46) of the compression sleeve (16) can slide to engage behind the fixing bead (34, 34').

14. The press fitting of one of claims 1 to 13, **characterized in that** the fitting body comprises plastic material, metal and/or a ceramic material and/or the compression sleeve comprises metal and/or plastic material.

## Revendications

1. Raccord à compression pour la connexion d'au moins un tuyau, comprenant
- un corps de raccord (12, 12') avec au moins une douille de support (14) comprenant une extrémité libre (24), par dessus laquelle l'extrémité d'un tuyau à connecter peut être poussée sur la douille de support (14),
- le corps de raccord (12, 12') comprend un boudin de fixation (34, 34') s'étendant autour de la douille de support (14) et sous un angle aigu par rapport à la direction radiale de la douille de support (14), le boudin étant prévu à l'extrémité de la douille de support (14) opposée à l'extrémité libre (24),
- une douille de serrage (16) disposée sensiblement concentriquement par rapport à la douille de support (14), la douille de serrage comprenant une partie de fixation (46) sensiblement radiale par rapport à la douille de serrage (16), dans laquelle partie le diamètre de la douille de serrage (16) est moindre que celui du boudin de fixation (34, 34') du corps de raccord (12, 12') et qui est prévue pour s'accrocher derrière le boudin de fixation (34, 34'),
**caractérisé en ce que**
- le diamètre intérieur de la partie de fixation (46) de la douille de serrage (16) et le diamètre dudit boudin de fixation (34, 34') du corps de raccord (12, 12') sont adaptés tellement que la partie de fixation (46) de la douille de serrage (16) peut être poussée par dessus le boudin de fixation (34, 34') du corps de raccord (12, 12') par mouvement axial.

2. Raccord à compression selon la revendication 1, **caractérisé en ce que** le boudin de fixation (34, 34') du corps de fixation (12, 12') est fermé dans la direction de la circonférence.

3. Raccord à compression selon la revendication 1 ou 2, **caractérisé en ce que** le boudin de fixation (34, 34') du corps de raccord (12, 12') est en forme d'hélice selon la direction de la circonférence.

4. Raccord à compression pour la connexion d'au moins un tuyau, comprenant
- un corps de raccord (12, 12') avec au moins une douille de support (14) comprenant une extrémité libre (24), par dessus laquelle l'extrémité d'un tuyau à connecter peut être poussée sur la douille de support (14),
- le corps de raccord (12, 12') comprend un boudin de fixation (34, 34') s'étendant autour de la douille de support (14), le boudin étant prévu à l'extrémité de la douille de support (14) opposée à l'extrémité libre (24),
- une douille de serrage (16) disposée sensiblement concentriquement par rapport à la douille de support (14), la douille de serrage comprenant une partie de fixation (46) s'étendant sous un angle aigu par rapport à la direction radiale de la douille de serrage (16), dans laquelle partie le diamètre de la douille de serrage (16) est moindre que celui du boudin de fixation (34, 34') du corps de raccord (12, 12') et qui est prévue pour s'accrocher derrière le boudin de fixation (34, 34'),
**caractérisé en ce que**
- le diamètre intérieur de la partie de fixation (46) de la douille de serrage (16) et le diamètre dudit boudin de fixation (34, 34') du corps de raccord (12, 12') sont adaptés tellement que la partie de fixation (46) de la douille de serrage (16) peut être poussée par dessus le boudin de fixation (34, 34') du corps de raccord (12, 12') par mouvement axial.

5. Raccord à compression selon la revendication 4, **caractérisé en ce que** la partie de fixation (46) de la douille de serrage (16) est fermée dans la direction de la circonférence.

6. Raccord à compression selon la revendication 4 ou 5, **caractérisé en ce que** la partie de fixation (46) de la douille de serrage (16) est en forme d'hélice selon la direction de la circonférence.

7. Raccord à compression pour la connexion d'au moins un tuyau, comprenant
- un corps de raccord (12, 12') avec au moins une douille de support (14) comprenant une extrémité libre (24), par dessus laquelle l'extrémité d'un tuyau à connecter peut être poussée sur la douille de support (14),
- le corps de raccord (12, 12') comprend un boudin de fixation (34, 34') s'étendant autour de la douille de support (14) et sous un angle aigu par rapport à la direction radiale de la douille de support (14), le boudin étant prévu à l'extrémité de la douille de support (14) opposée à l'extrémité libre (24),
- une douille de serrage (16) disposée sensiblement concentriquement par rapport à la douille de support (14), la douille de serrage comprenant une partie de fixation (46) s'étendant sous un angle aigu par rapport à la direction radiale de la douille de serrage (16), dans laquelle partie le diamètre de la douille de serrage (16) est moindre que celui du boudin de fixation (34, 34') du corps de raccord (12, 12') et qui est prévue pour s'accrocher derrière le boudin de fixation (34, 34'),
**caractérisé en ce que**
- le diamètre intérieur de la partie de fixation (46) de la douille de serrage (16) et le diamètre dudit boudin de fixation (34, 34') du corps de raccord (12, 12') sont adaptés tellement que la partie de fixation (46) de la douille de serrage (16) peut être poussée par dessus le boudin de fixation (34, 34') du corps de raccord (12, 12') par mouvement axial.

8. Raccord à compression selon la revendication 7, **caractérisé en ce que** les angles aigus sont différents.

9. Raccord à compression selon une des revendications 1 à 8, **caractérisé en ce que** le boudin de fixation (34, 34') est disposé dans une partie (28) du corps de raccord (12, 12') adjacente à la douille de support (14), le diamètre de ladite partie étant plus grand que celui de la douille de support (14) et plus petit que le diamètre de la partie de fixation de la douille de serrage (16).

10. Raccord à compression selon une des revendications 1 à 9, **caractérisé en ce que** la partie de fixation (46) de la douille de serrage (16) est en forme d'une extrémité (40) de la douille de serrage (16), repliée vers l'intérieur.

11. Raccord à compression selon une des revendications 1 à 9, **caractérisé en ce que** la douille de compression (16) est configurée comme moulure dans sa partie de fixation (46).

12. Raccord à compression selon une des revendications 1 à 11, **caractérisé en ce que** le boudin de fixation (34, 34') comprend une face latérale sensiblement détournée de l'extrémité libre (24) de la douille de support (14) et la partie de fixation (46) de la douille de serrage (16) comprend une face de contact (44) sensiblement tournée vers l'extrémité libre (24) de la douille de support (14) pour contacter la face latérale (38) du boudin de fixation (34, 34').

13. Raccord à compression selon une des revendications 1 à 12, **caractérisé en ce que** le boudin de fixation (34, 34') présente une face inclinée (36) à son coté tourné vers l'extrémité libre (24) de la douille de support (14), par dessus de laquelle la partie de fixation (46) de la douille de serrage (16) peut glisser pour s'accrocher derrière le boudin de fixation (34, 34').

14. Raccord à compression selon une des revendications 1 à 13, **caractérisé en ce que** le corps de raccord comprend de la matière plastique, métal et/ou un matériau céramique et/ou la douille de serrage comprend du métal et/ou de la matière plastique.
